# EUROPEAN PATENT APPLICATION

(11) **EP 3 871 878 A1**
(43) Date of publication of application: **01.09.2021**
(21) Application number: 21158709.2
(22) Date of filing: 23.02.2021
(51) Int. Cl.: B32B 27/08, A44B 1/00, B32B 27/20, B32B 27/36, B32B 37/00, C08L 67/06, A44B 1/02

(54) **PROCESS FOR MANUFACTURING A RECYCLED POLYESTER MATERIAL FROM AT LEAST ONE POLYESTER WASTE, RECYCLED POLYESTER MATERIAL OBTAINED FROM SAID PROCESS AND USE THEREOF**

(30) Priority: 27.02.2020 ES 202030166
(71) Applicant: Fuente Mauro, Fernando, 28220 Majadahonda (Madrid) (ES); Fuente Mauro, Lorenzo, 28231 Las Rozas (Madrid) (ES); Fuente Mauro, Francisco José, 28003 Madrid (ES); Fuente Mauro, Valeriano, 28231 Las Rozas (Madrid) (ES)
(72) Inventor: Fuente Mauro, Fernando, 28220 Majadahonda (Madrid) (ES); Fuente Mauro, Lorenzo, 28231 Las Rozas (Madrid) (ES); Fuente Mauro, Francisco José, 28003 Madrid (ES); Fuente Mauro, Valeriano, 28231 Las Rozas (Madrid) (ES)
(74) Representative: Ungria López, Javier

(57) **Abstract**

An object of the invention is a material for making buttons and/or textile accessories and the process for the manufacture thereof which comprises preparing at least one layer of virgin polyester from a mixture of an unsaturated polyester resin (between 20 % and 90 %), styrene (between 1 % and 50 %), accelerant (between 0.03 % and 15 %), paraffin (between 1 % and 8 %), a pigment (between 0.02 % and 10 %) and a catalyst (between 0.5 % and 5 %); and an additional layer from a mixture of a first sub-layer obtained from the mixture of ground polyester waste (between 1 and 98 %) and a catalyst (between 0.5 % and 5 %), and a second sub-layer obtained from a mixture of an unsaturated polyester resin (between 20 % and 90 %), styrene (between 1 % and 50 %), accelerant (between 0.03 % and 15 %), paraffin (between 1 % and 8 %), a pigment (between 0.02 % and 10 %) and a catalyst (between 0.5 % and 5 %).

## Description

### TECHNICAL FIELD OF THE INVENTION

The present invention refers to a new process for manufacturing a ground polyester waste material that is especially suitable for making buttons and/or textile accessories.

Another object of the invention is the recycled polyester material obtained from said process and the use thereof for manufacturing a variety of products, such as buttons or textile articles, such as, for example, adornments, toggles, badges, rivets, snaps, clasps, horns, billets, cufflinks, buckles, rings, pins, stoppers, tassel ends or cord ends, pullers, etc.

### BACKGROUND OF THE INVENTION

The present invention arises from the interest in improving processes existing up until now for manufacturing different products in the textile industry. Particularly, it provides a sustainable process capable of preventing the limitations currently existing in the manufacture of buttons and other accessories from polyester.

It is therefore a process that provides the advantage of utilising a waste that has been discarded up until now in conventional processes for manufacturing materials of this type. In this manner, the environmental impact associated with these processes is reduced by reducing the consumption of raw materials and making use of a potentially useful material, which up until now was discarded and destroyed.

The following documents related to the object of the invention have been found in the state of the art:
Patent application CN105754312 relates to a method of preparing polyester buttons from different raw materials, such as polyester resin, an accelerant, recycled plastic powder, pigments, a curing agent and a diluent. "Recycled plastic powder", for purposes of this patent, is understood to mean powder coming from the scrap left from the manufacturing process. Thus, the process described in said document offers the possibility of reducing the amount of virgin resin that is used, while maintaining the quality of the end product.

Patent application CN108440931 describes a method of recycling plastic intended for manufacturing polyester buttons. The examples provided in said application describe the possibility of using recycled plastic powder, together with an unsaturated polyester resin, paraffin, pigments, antioxidant (peroxide) and other components common in the preparation of polyester-based plastics.

Patent document EP0968076 describes a method for the primary recycling of polyester which is mixed with virgin polyester in a proportion that can range between 1 % and 60 % by weight with respect to the total polyester produced.

The process object of the invention is based, like the previous processes, on the use of ground polyester waste, although it relates to a new method not disclosed to date in the state of the art since it combines a layer of ground polyester waste with as many layers of unsaturated resin that are required to obtain different structures which would not be achieved by making use of techniques previously patented for this type of product. It is therefore a sustainable process which allows being adapted to the needs, inter alia, of the fashion industry, allowing different structures to be developed in the final finishing of the button or other textile article as a result of the combination of different raw materials. Making imitations of natural materials or new designs in articles with ground polyester waste is thereby achieved, and at the same time, the reduction of the environmental impact associated with manufacturing products of this type is sought by making use of a material which would otherwise be part of the process waste chain.

### DESCRIPTION OF THE INVENTION

A first object of the invention is, therefore, a process for manufacturing a material that is especially suitable for making buttons and/or textile accessories from ground polyester waste, wherein said process is characterised in that it comprises:
(a) a first step of preparing at least one layer of virgin polyester from a mixture of ingredients selected from a group consisting of:
   - an unsaturated polyester resin, preferably at a percentage by weight that can range between 20% and 90%;
   - a catalyst, preferably at a percentage by weight that can range between 0.5 % and 5 %. Said catalyst can preferably consist of cyclohexanone peroxide or methyl ethyl ketone peroxide;
   - a styrene monomer, preferably at a percentage by weight that can range between 1 % and 50 %;
   - an accelerant, preferably at a percentage by weight that can range between 0.03 % and 15 %. Said accelerant can preferably consist of cobalt octoate;
   - paraffin (preferably paraffin 46-48), preferably at a percentage by weight that can range between 1 % and 8 %; and
   - a pigment, which can be a solid or pearlescent pigment, preferably at a percentage by weight that can range between 0.02 % and 10%;
(b) a second step of preparing an additional layer from ground polyester waste (preferably with a particle size comprised between 1 and 900 micra, more preferably between 300 and 800 micra and even more preferably between 500 and 700 micra) on one or both outer surfaces of said layer(s) of virgin polyester. Preferably, this second layer of ground polyester waste will be prepared from a homogeneous mixture of two sub-layers:
   - a first sub-layer obtained from ground polyester waste, preferably at a percentage by weight that can range between 1 and 98 %, more preferably between 20 and 98 %, and even more preferably between 20 % and 60 %, and a catalyst, preferably at a percentage by weight that can range between 0.5 % and 5 %, which can consist of cyclohexanone peroxide or methyl ethyl ketone peroxide; and
   - a second sub-layer obtained from a mixture of ingredients selected from a group consisting of:
      - an unsaturated polyester resin, preferably at a percentage by weight that can range between 20 % and 90 %;
      - a catalyst, preferably at a percentage by weight that can range between 0.5 % and 5 %, preferably selected from a group that can consist of cyclohexanone peroxide or methyl ethyl ketone peroxide;
      - a styrene monomer, preferably at a percentage by weight that can range between 1 % and 50 %;
      - an accelerant, preferably at a percentage by weight that can range between 0.03 % and 15 %. Preferably, the accelerant will be cobalt octoate;
      - paraffin, preferably at a percentage by weight that can range between 1 % and 8 %; and
      - a pigment, preferably a solid or pearlescent pigment, preferably at a percentage by weight that can range between 0.02 % and 10 %.

The amount of polyester waste will depend on the amount of virgin polyester used in the layer (or layers) of virgin polyester. Preferably, this amount can range between 1 and 98 %, more preferably between 20 % and 98 %, and even more preferably between 20 % and 60 % by weight with respect to the total weight of the material finally obtained from the process that has been described (the final polyester sheet).

For purposes of this patent, the ground waste will be polyester coming from the scrap of the process of producing other products, such as, for example, buttons, adornments, toggles, badges, rivets, snaps, clasps, horns, billets, cufflinks, buckles, rings, pins, stoppers, tassel ends, cord ends or pullers, among other examples.

The layer of ground polyester waste is characterised by being a uniform layer, without shimmering or streaks. Unlike this layer of ground waste, the layer(s) of unsaturated virgin polyester resin may have any type of finishing, such as, for example, streaks, stripes, glossing or any other type of design or finishing. In this manner, the claimed process has the advantage of being very flexible, adapting to the needs and requirements of the products to be manufactured.

The total number of layers of unsaturated virgin polyester resin will depend on the design of the end product. Preferably, the end product will comprise a layer of ground waste and between 1 and 9 layers of virgin polyester.

Depending on the final structure to be obtained, it will be possible to include in the mixtures of virgin polyester, furthermore, at least one additional ingredient selected from a group preferably consisting of aluminas, which allow imparting a pearlescent effect to the material in the colours of natural mother of pearl, iridescent, blue, red, green shimmering, etc., in addition to being able to impart a metallised effect to the polyester; beads, having the same function as aluminas, but only in white; or stripes, which are used for orienting the position of the beads or aluminas with respect to the light, depending on the light effect to be obtained in the material. Preferably, the percentage by weight of these ingredients in the final material can range between 0.20 % and 35 %, and more preferably between 0.20 % and 20 % by weight, where they can vary based on the finishings and colours to be achieved.

The mixtures for preparing each layer of virgin polyester can be carried out by mixing all the ingredients described above (except the catalyst) in a mixer under stirring (preferably at a speed of between 25 and 500 rpm), until obtaining a mixture to which, once homogenised, the catalyst is added. After adding the catalyst, the mixture will be left under stirring at a speed of between 25 and 500 rpm for a time that can preferably range between 1 and 15 minutes. After this time, the mixture is added to a cylinder through which it is distributed, giving rise to a layer of virgin polyester. The cylinder can rotate at a speed preferably comprised between 25 rpm and 175 rpm such that, by centrifugal force, the resin is distributed forming a sheet. The process can be repeated the times required to obtain the number of layers of virgin polyester to be comprised in the end product. This process will be repeated to form the additional layer of ground polyester waste, which will be applied on one of the two outer surfaces of said layer(s) of virgin polyester. In a general manner, the size of each of the layers can range between 0.5 millimetres and 15 millimetres.

The different ingredients of the layers will interact based on their viscosity and gelation time. Based on their interaction, it is possible to obtain layers of polyester with different finishings, such as, for example, of natural materials such as wood or mother of pearl.

One of the main advantages of the process object of the invention is that it is a very versatile process which allows being adapted to the structure of the different products to be manufactured.

As mentioned earlier, one of the advantages of the object of the present invention is that it allows products to be obtained with different finishings and designs. Particularly, it allows products to be obtained with finishings imitating natural materials (wood, coconut, horn, mother of pearl, etc.), as well as with various designs (with streaks, shimmering, glossing, etc.).

In this manner, another object of the invention is a ground polyester waste material obtained from the described process, characterised in that it comprises:
(a) at least one layer of virgin polyester; and
(b) an additional layer comprising between 1 and 98 %, more preferably between 20 and 98 % and even more preferably between 20 and 60 % by weight with respect to the total weight of the material of ground polyester waste with a particle size comprised between 1 and 900 micra, more preferably between 300 and 800 micra and even more preferably between 500 and 800 micra.

Throughout this specification, reference to the particle size of the ground polyester waste is in regard to the size of the particles that are sieved in metallic meshes with a given size of the opening, which can range between 1 and 900 micra. The choice of particle size will depend on the properties of the end product to be manufactured.

Lastly, an object of the invention is the use of said material for manufacturing buttons and/or textile accessories.

### DETAILED DESCRIPTION OF THE INVENTION

As described above, the process object of protection is based on the manufacture of a composite material made up of a layer of ground polyester waste and at least one layer of unsaturated virgin polyester resin.

In a preferred embodiment of the invention, the process object of protection can be carried out after a first conventional process of manufacturing polyester buttons. In particular, this process can comprise:
- preparing a mixture of between 20 % and 90 % by weight of an unsaturated polyester resin, between 0.03 % and 15 % by weight of an accelerant, between 1 % and 50 % by weight of a styrene monomer, between 1 % and 8 % by weight of paraffin and between 0.02 % and 10 % of one or more pigments (preferably, a solid or pearlescent pigment). Once the mixture is prepared, between 0.5 % and 5 % by weight of a catalyst will be added. These ingredients can be selected from the ingredients described above when defining the process object of protection;
- preparing a sheet of the mixture obtained in the preceding step in at least one conventional machine which can consist of a cylinder, giving rise to a sheet of said material in a gum-like state. This sheet can remain in the cylinder preferably for a time comprised between 30 minutes and 90 minutes. Next, the mixture is taken to at least one cutting machine where discs are die cut with a given diameter that can range between 8 millimetres and 70 millimetres. These discs are the base of the buttons, which will be separated from polyester scrap or waste. This waste is the polyester waste that can be reused in the process object of the invention, with the advantage of recycling a material which would otherwise be discarded and destroyed. To this end, it will be subjected to at least one prior grounding and sieving phase until obtaining a powder having a particle size preferably comprised between 1 and 900 micra, which will next be subjected to a phase for sorting, preferably by materials and colours.

The conventional process is then repeated, preparing a mixture of between 20 % and 90 % by weight of virgin polyester, 0.03 % and 15 % by weight of at least one accelerant, between 1 % and 50 % by weight of styrene, between 1 % and 8 % by weight of paraffin and between 0.02 % and 10 % by weight of a pigment. A catalyst at a percentage by weight comprised between 0.5 % and 5 % will be added to the obtained mixture once it is homogenised. Once again, the ingredients will preferably be selected from the group described above when defining the process object of the invention. This process will be repeated the times required to form the layers of virgin polyester to be comprised in the end material.

Lastly, the layer of ground waste is prepared, for which purpose there are homogeneously mixed two sub-layers:
- a first sub-layer obtained from ground polyester waste, which will preferably be between 1 and 98 %, more preferably between 20 % and 98 %, and even more preferably between 20 % and 60 % by weight, and a catalyst, preferably at a percentage by weight that can range between 0.5 % and 5 %, which can consist of cyclohexanone peroxide or methyl ethyl ketone peroxide; and
- a second sub-layer which is prepared the same way as in the conventional process, obtained from a mixture of ingredients selected from a group consisting of:
   - an unsaturated polyester resin, preferably at a percentage by weight that can range between 20 % and 90 %;
   - a catalyst, preferably at a percentage by weight that can range between 0.5 % and 5 %, preferably selected from a group that can consist of cyclohexanone peroxide or methyl ethyl ketone peroxide;
   - a styrene monomer, preferably at a percentage by weight that can range between 1 % and 50 %;
   - an accelerant, preferably at a percentage by weight that can range between 0.03 % and 15 %. Preferably, the accelerant will be cobalt octoate;
   - paraffin, preferably at a percentage by weight that can range between 1 % and 8 %; and
   - a pigment, preferably a solid or pearlescent pigment, preferably at a percentage by weight that can range between 0.02 % and 10 %.

Next, both sub-layers are mixed to form the layer of ground waste with a percentage of ground polyester waste, which will preferably be between 1 and 98 %, more preferably between 20 % and 98 %, and even more preferably between 20 % and 60 % by weight with respect to the total weight of the material. This mixture is then added to the cylinder, on the last layer of virgin polyester located in the cylinder. Once introduced in the cylinder, it will remain inside same for an estimated time of 30 to 90 minutes, rotating at a speed preferably comprised between 25 rpm and 175 rpm until forming the end sheet by centrifugal force. When the sheet reaches a preferred hardness of between 70 and 80 Shore, it is removed from the cylinder and passes on to the process of die-cutting discs with the desired size.

In an alternative embodiment of the invention, the process can be carried out in reverse order, first forming the layer of ground polyester waste, and next, the layer(s) of polyester virgin.

### BRIEF DESCRIPTION OF THE FIGURES

To complement the description and for the purpose of helping to better understand the features of the invention, the following figures are attached for illustrative and non-limiting purposes:

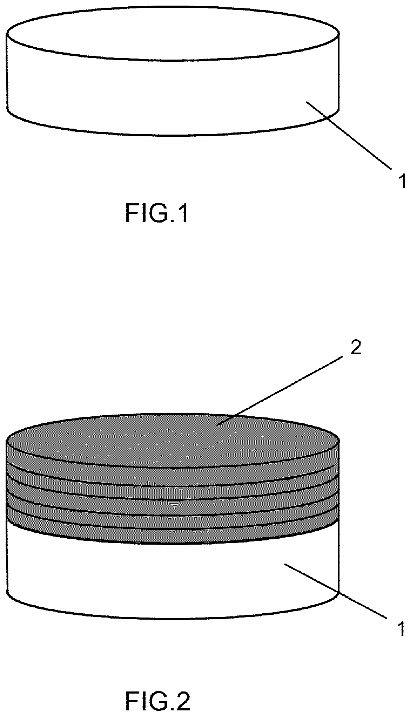

Figure 1, which depicts a material from the state of the art, where 1 is a layer of recycled polyester which, in this case, forms a single structure in the material; and
Figure 2, which depicts a particular embodiment of the invention, where 1 corresponds to the layer of recycled polyester and 2 is each of the layers made up of an unsaturated virgin polyester resin.

### PREFERRED EMBODIMENT OF THE INVENTION

A particular embodiment of the process object of the invention referring to the manufacture of buttons is described below.

The process comprises forming a first layer of virgin polyester from a mixture of the following ingredients, where the percentages are by weight with respect to the total weight of the mixture:
- unsaturated polyester resin (at 87.88 %);
- styrene (at 6 %);
- paraffin (at 4 %);
- pigment (at 0.04 %);
- accelerant (at 0.08 %); and
- catalyst (at 2 %).

Next, the preparation of a second layer of virgin polyester is carried out from the following ingredients, in percentage by weight:
- unsaturated polyester resin (at 86.92 %);
- styrene (at 4 %);
- pigment (at 7 %);
- accelerant (at 0.08 %); and
- catalyst (at 2 %).

After the preparation of this second layer, the preparation of a third layer of polyester (corresponding to the second sub-layer which will give rise to the layer of recycled polyester) is carried out from the following ingredients, in percentage by weight:
- unsaturated polyester resin (at 49.55 %);
- styrene (at 42 %);
- paraffin (at 6 %);
- pigment (at 0.3 %);
- accelerant (at 0.15 %); and
- catalyst (at 2 %).

Lastly, a fourth layer (corresponding to the first sub-layer which will give rise to the layer of polyester waste) is prepared from ground polyester waste and, particularly, from the following ingredients, in percentage by weight:
- ground polyester waste (at 98 %); and
- catalyst (at 2 %).

The components of each layer will be mixed under stirring, such that each layer will be made up of a homogeneous mixture.

First, the ingredients of the first two layers are mixed under stirring for a time preferably comprised between 1 and 2 minutes. Once both mixtures are homogenised, the first layer is added to the cylinder, rotating at a speed of 150 rpm, achieving a uniform distribution thereof. Next, the second layer is added, such that it penetrates the first layer, maintaining the rotational speed of the cylinder at 150 rpm. This interaction between layers is what brings about the effect or structure of the material. Depending on the design to be obtained, individual layers of perfectly distinguishable virgin resin can be achieved (for example, layers having different colours), or an interaction between the layers of virgin polyester can be achieved, such that it penetrates at least one of them in at least one second layer (of virgin polyester). Nevertheless, the preparation of each of the layers of virgin polyester will be carried out individually, adding them to the cylinder separately until achieving the desired effect.

After between preferably 8 and 10 minutes have elapsed, the third layer is mixed with the fourth layer in the agitator and the mixture is distributed on the cylinder, now rotating at a speed of 175 rpm. The cylinder continues rotating for a time preferably comprised between 30 and 90 minutes. Next, the speed is reduced to 75 rpm, at which it remains for a time of between approximately 5 and 45 minutes, until a gum-like state is achieved. To facilitate this process, the water circuit can be turned on, cooling the cylinder to temperature preferably comprised between 0 °C and 25 °C. When the mixture reaches values of between 70 and 80 Shore, the die-cutting process can start, a size of 32 lines (equivalent to 20 mm in diameter) being established.

The obtained discs can be placed in a water bath at a temperature of 85 °C, where they can remain for one hour for the material to stabilise and acquire the hardness required for configuring the buttons, or they can be left to stand in dry conditions for a time that can range between 2 and 12 hours.

Next, the two faces of the button and the holes thereof can be prepared. Preferably, the layer of recycled polyester will not be turned so that it does not lose its content, such that it will only be subjected to a polishing process.

Subsequently, the other face of the button will be modelled according to the shape to be imparted to it, based on its design.

Lastly, the buttons are subjected to a polishing process to achieve the desired finishing (gloss, semi-gloss or matte).

In embodiments in which a glossy effect is desired, the buttons can be placed in a drum with water and pumice powder. The drum can be left rotating for 2 hours. After this time has elapsed, any imperfection the buttons may have will have been eliminated. Lastly, the obtained buttons can be transferred to a wood or corn drum, thereby refining the finishing thereof.

In embodiments in which a semi-gloss effect is desired, the buttons can be placed in a corn or wood drum, where they will remain for 10 hours.

Lastly, in those embodiments in which a gloss effect is desired, the buttons can be placed in a vessel (drum) where they will be mixed with pieces of ceramic, water and pumice powder, leaving them to act for 12 hours. After this time has ended, the drum will be rinsed and wax will be added for the buttons to acquire gloss. This process can last from 2 to 3 hours.

## Claims

1. A process for manufacturing a material that is especially suitable for making buttons and/or textile accessories from ground polyester waste, wherein said process is **characterised in that** it comprises:
(a) a first step of preparing at least one layer of virgin polyester from a mixture of ingredients selected from a group consisting of:
• an unsaturated polyester resin, at a percentage by weight comprised between 20 % and 90 %;
• a styrene monomer, at a percentage by weight comprised between 1 % and 50 %;
• an accelerant, at a percentage by weight comprised between 0.03 % and 15 %;
• paraffin, at a percentage by weight comprised between 1 % and 8 %;
• and a pigment, at a percentage by weight comprised between 0.02 % and 10 %;
resulting in a mixture to which, once homogenised, a catalyst at a percentage by weight comprised between 0.5 % and 5 % is added;
(b) a second step of preparing an additional layer from ground polyester waste on one of the two outer surfaces of the layer or layers of virgin polyester obtained in the previous step, wherein said second layer is prepared from a homogeneous mixture of two sub-layers:
• a first sub-layer obtained from the mixture of ground polyester waste, at a percentage by weight comprised between 1 and 98 %, and a catalyst, at a percentage by weight comprised between 0.5 % and 5 %; and
• a second sub-layer obtained from a mixture of ingredients selected from a group consisting of:
- an unsaturated polyester resin, at a percentage by weight between 20 % and 90 %;
- a styrene monomer, at a percentage by weight between 1 % and 50 %;
- an accelerant, at a percentage by weight between 0.03 % and 15 %;
- paraffin, at a percentage by weight between 1 % and 8 %; and
- a pigment, at a percentage by weight between 0.02 % and 10 %;
resulting in a mixture to which, once homogenised, a catalyst is added at a percentage by weight between 0.5 % and 5 %.

2. The process according to claim 1, wherein the percentage of ground polyester waste is comprised between 20 and 98 %.

3. The process according to claim 1 or 2, wherein the number of layers of virgin polyester is comprised between 1 and 9.

4. The process according to any one of claims 1 to 3, wherein the mixture for preparing each layer of virgin polyester is carried out by mixing the unsaturated polyester resin, the accelerant, the paraffin solution and the pigment under stirring at a speed of between 25 and 500 rpm, until obtaining a mixture to which, once homogenised, the catalyst is added, the mixing continuing under stirring at a speed of between 25 and 500 rpm for a time of between 1 and 15 minutes, after which it is added to a cylinder through which it is distributed, giving rise to a layer of virgin polyester.

5. The process according to any one of claims 1 to 4, wherein the size of each layer of virgin polyester ranges between 0.5 millimetres and 15 millimetres.

6. The process according to any one of the preceding claims, wherein the catalyst is selected from cyclohexanone peroxide and methyl ethyl ketone peroxide.

7. The process according to any one of the preceding claims, wherein the pigment is a solid or pearlescent pigment.

8. A material obtained from a process according to any one of claims 1 to 7, **characterised in that** it comprises:
(a) at least one layer of virgin polyester; and
(b) an additional layer comprising between 1 and 98 % by weight with respect to the total weight of the material of ground polyester waste with a particle size comprised between 1 and 900 micra.

9. Use of a material according to claim 8 for making buttons and/or textile accessories.
